# EUROPEAN PATENT APPLICATION

(11) **EP 2 311 728 A2**
(43) Date of publication of application: **20.04.2011**
(21) Application number: 09769395.6
(22) Date of filing: 26.06.2009
(51) Int. Cl.: B64C 1/26, B64C 5/02

(54) **STRUCTURE OF AN AIRCRAFT AEROFOIL**

(30) Priority: 27.06.2008 ES 200801928
(71) Applicant: Airbus Operations, S.L., 28906 Getafe Madrid (ES)
(72) Inventor: BARROSO VLOEDGRAVEN, Daniel, E-28906 Madrid (ES); RAMÍREZ BLANCO, Gonzalo, E-28906 Madrid (ES); LOZANO GARCÍA, José Luis, E-28906 Madrid (ES); LUQUE BUZO, Miguel, E-28906 Madrid (ES)
(74) Representative: Elzaburu Marquez, Alberto
(86) International application number: PCT/ES2009/070258
(87) International publication number: WO 2009/156549

(57) **Abstract**

Aircraft aerofoil structure, in particular rear spar structure (1) for the joining of lateral box beams (2) of a horizontal stabilizer of an aircraft, said rear spar (1) comprising a right rear spar (5) and a left rear spar (6), moreover said structure of said rear spar (1) includes a central section formed by an integrated component (10), and said integrated component (10) includes fittings (11) that serve for joining said rear spar structure (1) to the aircraft fuselage and projections (12) that serve for joining the central section formed by the integrated component (10) to the right rear spar (5) and left rear spar (6).

## Description

### Field of the invention

The present invention relates to an integrated structure for an aircraft aerofoil.

### Background of the invention

The aerofoils of aircraft are surfaces that provide the aircraft with lift owing to the aerodynamic effect.

The horizontal stabilizers of an aircraft are aerofoils of the aircraft that are capable of pivoting on its fuselage based on defined turning lines located on the tail of the aeroplane. The structures of the horizontal stabilizers of an aircraft typically comprise a leading edge, a torsion box beam, a trailing edge and an elevator. The leading edge forms part of the aerodynamic contour of the horizontal stabilizer, adapting it to the air flow. The torsion box beam is the main component of the horizontal stabilizer, and has to withstand the loads to which the structure is subjected. Usually the torsion box beam is a box beam of rectangular type comprising upper and lower covers, called skins, and front and rear covers, called the front spar and rear spar, respectively. The torsion box beam can also include intermediate covers inside it, called ribs, whose function is to maintain the aerodynamic shape of the stabilizer structure. The ribs mean that the torsion box can in its turn be splitted into a central box and several lateral boxes. Alternatively, another possible configuration of the horizontal stabilizer is to have intermediate spars instead of ribs. The spars are beams which, through their manner of construction, are able to withstand the relatively large bending moments that are transmitted to them by the aerofoil structure and arise from the reactions of the air on said spars.

Thus, the solutions adopted to date in the composition of the aerofoil structures of an aircraft typically comprise two lateral box beams and a metallic central box beam that in its turn comprises projections through which the lateral box beams are inserted and riveted. In this way, the box beam joint is double, in particular in the joining of the spars of both box beams, which has the drawback of difficulty and cost of the fabrication operations.

Another of the currently known solutions in the composition of the lifting structures of an aircraft comprises the joining of two lateral box beams, without a central box beam arranged between them, in which the rear spars are joined to the lateral box beams by means of a metallic fitting called a rear fitting and by means of independent connecting pieces, joined directly to the spar. The drawback of solutions of this type is that they require a large number of separate components for the aerofoil structure, with the associated difficulty and cost of the fabrication operations.

The present invention aims to remedy the shortcomings outlined above.

### Summary of the invention

Thus, the present invention relates to a structure of an aircraft aerofoil, in particular for horizontal stabilizers of aircraft, and more particularly for the joining of the rear spars to the lateral box beams in said aerofoils. According to the invention, the rear spars are joined by means of a single integrated component or central spar, such that said central spar component comprises, integrated within it, connecting pieces for joining the lateral box beams, the rear spars and the rest of the structure of the aircraft fuselage. In this way, according to the invention, the problems caused by the known solutions are solved, as it takes advantage of the existence of components that now have an additional use, so that the total number of components is reduced, thus minimizing the difficulty and the cost of the fabrication operations.

Thus, according to the invention, the existing components are used that join the horizontal stabilizer of the aircraft to its fuselage, which in turn constitute points through which the stabilizer structure turns relative to said fuselage, extending the usefulness of said components, such that a single integrated component is designed, which is in addition part of the connection of the two halves that make up the horizontal stabilizer, thus avoiding the special components designed for this purpose, which are used at present.

Other characteristics and advantages of the present invention will become clear from the following detailed description illustrating an embodiment of its object, referring to the accompanying drawings.

### Description of the drawings

Fig. 1 shows schematically the joining of the lateral box beams of an aircraft lifting structure through a metallic central box beam and independent connecting pieces, according to the prior art.
Fig. 2 shows schematically the joining of lateral box beams of an aircraft lifting structure through independent connecting pieces and a metallic fitting of the rear fitting type, according to the prior art.
Fig. 3 shows schematically the joining of lateral box beams of an aircraft lifting structure through a single integrated central spar component, according to the invention.
Fig. 4a shows schematically, with a rear view of an aircraft aerofoil, the transition of lateral box beams in the aircraft lifting structure with a single integrated central spar component, according to the invention.
Fig. 4b shows schematically, with a rear view of an aircraft aerofoil, the transition of lateral box beams in the aircraft lifting structure with a single integrated central spar component, according to the prior art of Fig. 2.

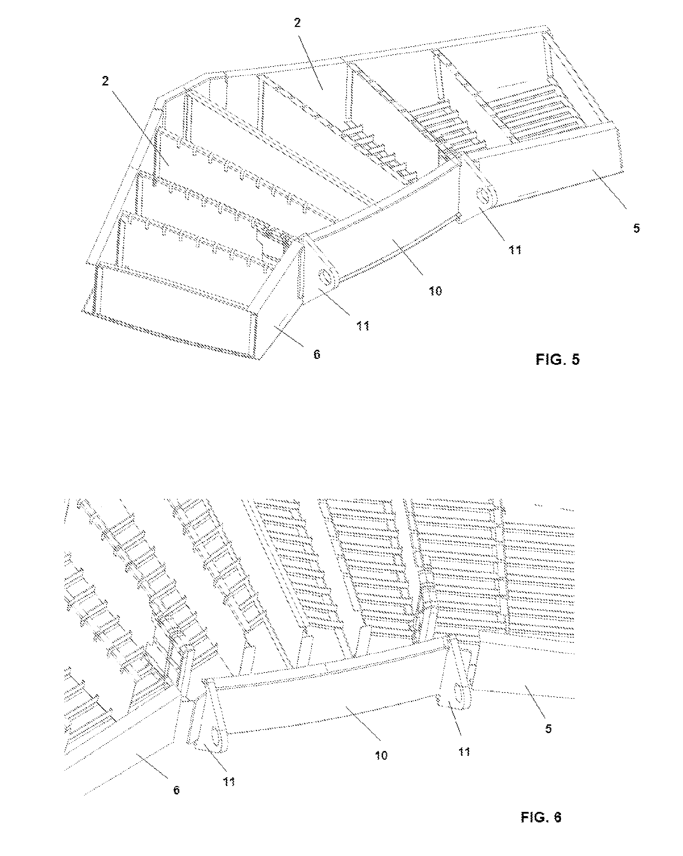

Fig. 5 shows a perspective view of the joining of lateral box beams of an aircraft lifting structure through a single integrated central spar component, according to the invention.
Fig. 6 shows a detail of the joining of lateral box beams of an aircraft lifting structure through a single integrated central spar component, according to the invention.

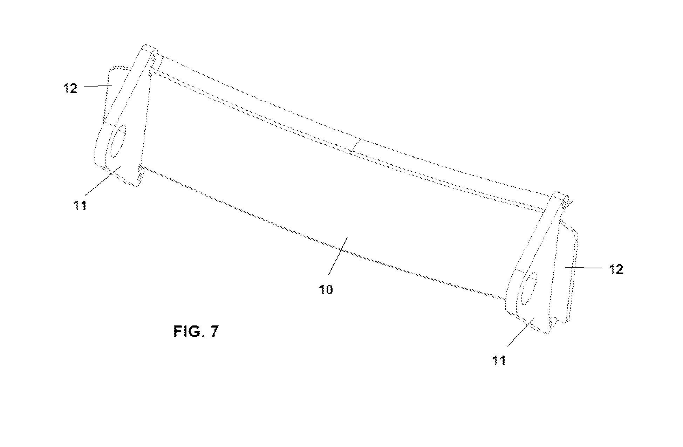

Fig. 7 shows in detail the single integrated central spar component for the joining of lateral box beams of an aircraft lifting structure, according to the invention.

### Detailed description of the invention

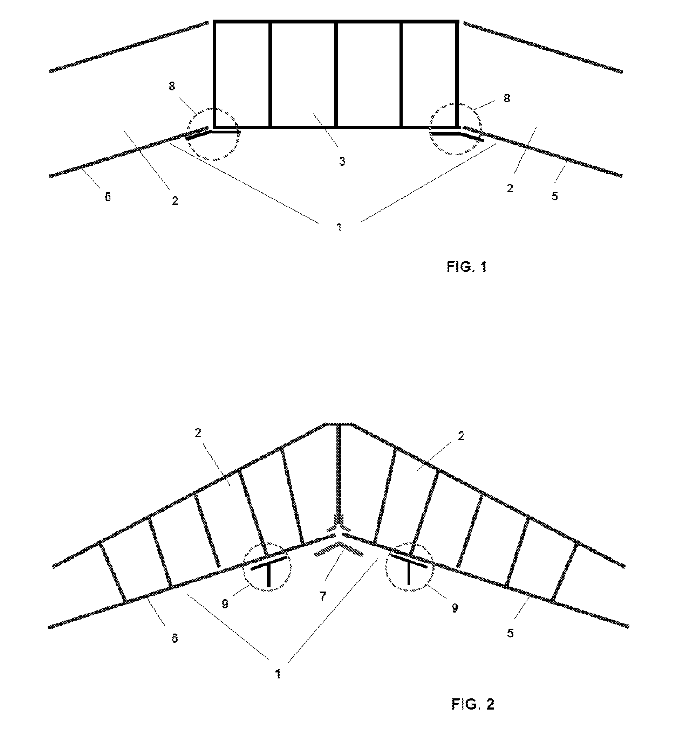

The known solutions adopted to date for the connecting elements of lateral box beams in lifting structures of aircraft, in particular of horizontal stabilizers of aircraft, are shown in Figs. 1 and 2.

Fig. 1 shows the known joining of lateral box beams 2 of a lifting structure, in particular of a horizontal stabilizer of an aircraft, through a metallic central box beam 3 that comprises projections 8 in the manner of "wings" for inserting and riveting said lateral box beams 2 and joining them to the rest of the aircraft fuselage. In this way, the connection of the lateral box beams 2 is double, as shown in Fig. 1, in particular in the joining of the rear spar 1, said rear spar 1 comprising a right rear spar 5 and a left rear spar 6.

Fig. 2 shows the known joining of lateral box beams 2 of a lifting structure, in particular of a horizontal stabilizer, through a metallic fitting 7 of the rear fitting type for the connection of the right rear spar 5 and of the left rear spar 6, and of independent connecting pieces 9, joined to the right and left rear spars 5 and 6, that connect said spars 5 and 6 to the rest of the structure of the aircraft fuselage, such that the horizontal stabilizer pivots and is guided on these components 9.

Thus, the present invention develops a connection of rear spar 1 for aerofoils of aircraft, in particular for horizontal stabilizers of aircraft, that comprises a single component 10 or central spar as integrated component made of composite, preferably of carbon fibre by the resin transfer moulding or RTM technique, which in its turn comprises integrated fittings 11 preferably made of carbon fibre and projections 12 also preferably of carbon fibre for connection to the right and left rear spars, 5 and 6. The integrated component 10 is made entirely of the same composite, and is fabricated in one shot, and the fittings 11 and projections 12 are made at the same time. In this way, we have a concept of joining of lateral box beams 2 for aerofoils, based on the integration of components and the elimination of joints, with the following advantages:
- possibility of making a single integrated connecting component 10 in carbon fibre, which permits:
   - unifying the materials involved, maximizing the percentage of composite employed, with the weight advantages that this implies in the overall design of the aircraft,

- improving the assembly process, avoiding intermediate operations and saving time by reducing the number of elements to be assembled,
- greatly improving the inspections and maintenance of the finished structures, as it is a solution that does not incorporate metal;
   - practically eliminating the drilling in the known solutions.

Thus, the integrated connecting pieces 10 of the invention provide the joining of the lateral box beams 2, of the right and left rear spars 5 and 6, and of the rest of the structure of the aircraft fuselage in such a way that there is integration, relative to Fig. 2 that shows the prior art, of the functions of the metallic fitting 7 of the rear fitting type and of the independent connecting pieces 9. In this way, according to the invention, the problems resulting from the known solutions are solved, since it takes advantage of the existence of components, concretely the independent connecting pieces 9 of the prior art of Fig. 2, which now have an additional use, so that the total number of components is reduced, thus minimizing the difficulty and the cost of the fabrication operations for the complete structure.

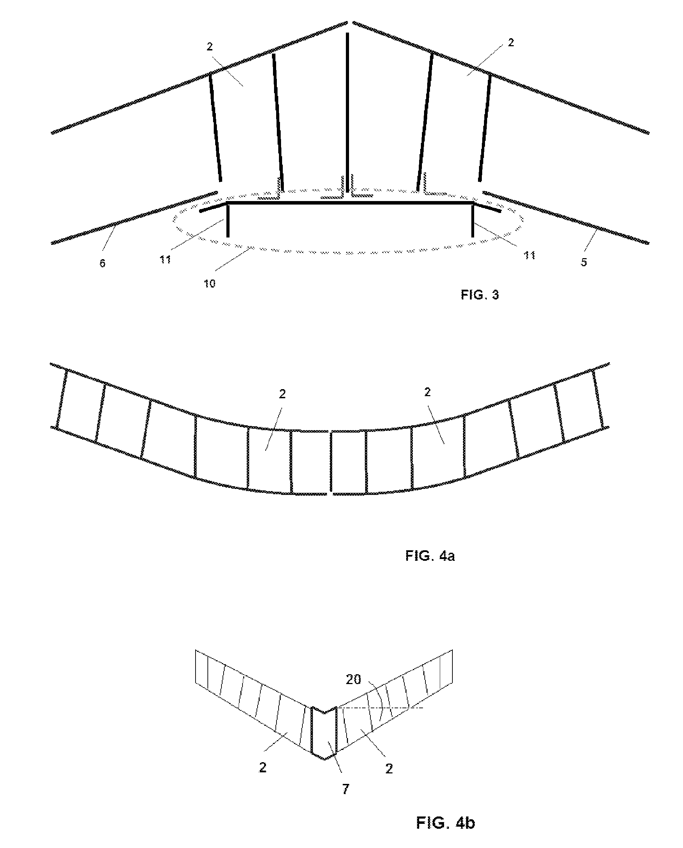

The new concept according to the invention comprises joining the rear spar 1 in three sections, a central section through the integrated component 10 or central spar and two lateral sections, through the right rear spar 5 and left rear spar 6. The central spar 10 comprises fittings 11 integrated in the same single component 10, which serve as connecting plates to the structure of the aircraft fuselage. The fittings 11 are also made of carbon fibre composite since they are integrated in the single integrated component 10. To avoid problems of fabrication of this single component or central spar 10, this solution according to the invention must be accompanied by a smooth transition of the skins of the lateral box beams 2, as shown in Fig. 4a which shows a rear view of the horizontal stabilizer with structure according to the invention, whereas Figs. 1, 2 and 3 correspond to top views from the front. The metallic fitting 7 of the rear fitting type in Fig. 2 could not be fabricated correctly in fibre owing to the dihedral 20 formed by the connection (Fig. 4b).

The foregoing is due to the fact that in a conventional configuration (Fig. 2), the connection of the lateral box beams 2 has a dihedral 20, which is the angle formed by the lateral box beams 2 with the horizontal, and it is not possible for a component to be made of fibre correctly, such as the existing metallic fitting 7 of the rear fitting type that accepts such pronounced angles. Since, according to the invention, the surface transition in the structure of the horizontal stabilizer takes place in the part of said stabilizer that is within the aircraft fuselage, the aerodynamic behaviour of the horizontal stabilizer is not impaired.

As an example, and as a concrete application of the invention to a lifting structure of an aircraft horizontal stabilizer, the main changes arising from the concept of the invention are as follows:
- since the connecting pieces 8 or 9 of the known solutions are necessary for introducing the supported load of the horizontal stabilizer, the invention utilizes said pieces 8 or 9 as integrated fittings 11 that also function as connecting pieces to the rest of the structure of the aircraft fuselage;
- relative to the prior art shown in Fig. 2, the central spar 10 is then integrated in the actual rear spar 1 without any need to use the metallic fitting 7 of the rear fitting type, thus reducing the number of components necessary for making the assembly;
- since the solution of the invention eliminates the connection of the rear spar 1, and to avoid a complicated shape of the central section or central spar 10 that would make its fabrication difficult and would adversely affect its behaviour, it is necessary to combine the solution of the invention with a smooth transition of skins of the lateral box beams 2, in order to avoid swaying movement.

Changes within the scope defined by the following claims can be made to the embodiments that have just been described.

## Claims

1. Rear spar structure (1) for joining lateral box beams (2) of a horizontal stabilizer of an aircraft, said rear spar (1) comprising a right rear spar (5) and a left rear spar (6), **characterized in that** the structure of said rear spar (1) further comprises a central section formed by an integrated component (10), said integrated component (10) including fittings (11) that serve for joining said rear spar structure (1) to the aircraft fuselage and projections (12) that serve for joining the central section formed by the integrated component (10) to the right rear spar (5) and left rear spar (6).

2. Rear spar structure (1) of aircraft horizontal stabilizer according to Claim 1, **characterized in that** the integrated component (10) is made of composite.

3. Rear spar structure (1) of aircraft horizontal stabilizer according to Claim 2, **characterized in that** the integrated component (10) is made of carbon fibre.

4. Rear spar structure (1) of aircraft horizontal stabilizer according to Claim 3, **characterized in that** the integrated component (10) is made by RTM.

5. Rear spar structure (1) of aircraft horizontal stabilizer according to any of the preceding claims, **characterized in that** the integrated component (10) is fabricated in one shot.

6. Rear spar structure (1) of aircraft horizontal stabilizer according to any of the preceding claims, **characterized in that** there is a smooth transition of the skins of the lateral box beams (2) that form the structure of the aircraft horizontal stabilizer.
